# EUROPEAN PATENT SPECIFICATION

(11) **EP 4 466 160 B1**
(45) Date of publication and mention of the grant of the patent: **18.03.2026**
(21) Application number: 23701254.7
(22) Date of filing: 16.01.2023
(51) Int. Cl.: B60N 2/54

(54) **SPRING UNIT AND METHOD FOR CHANGING A SPRING CONSTANT OF A SPRING ARRANGEMENT IN A SPRING UNIT**
FEDEREINHEIT UND VERFAHREN ZUM VERÄNDERN EINER FEDERKONSTANTE EINER FEDERANORDNUNG IN EINER FEDEREINHEIT
UNITÉ DE RESSORT ET PROCÉDÉ DE MODIFICATION D'UNE CONSTANTE DE RESSORT D'UN AGENCEMENT DE RESSORT DANS UNE UNITÉ DE RESSORT

(30) Priority: 17.01.2022 SE 2250033
(43) Date of publication of application: 27.11.2024
(73) Proprietor: Ullman Dynamics AB, 426 76 Västra Frölunda (SE); Ullman, Carl Magnus, 426 76 Västra Frölunda (SE)
(72) Inventor: ULLMAN, Carl Magnus, 426 76 Västra Frölunda (SE)
(74) Representative: Zacco Sweden AB
(86) International application number: PCT/EP2023/050841
(87) International publication number: WO 2023/135287

(56) References cited:
- DE-A1- 3 541 919
- DE-C1- 4 314 975
- DE-U1- 202008 011 303
- US-A1- 2006 061 021
- US-A1- 2010 330 894
- US-A1- 2015 366 125
- US-A1- 2016 143 443

## Description

### TECHNICAL FIELD

The invention relates to a spring unit, where the spring unit comprises a first attachment arrangement, a second attachment arrangement and a spring arrangement. The spring arrangement comprises a first flexible member attached to and extending between the first attachment arrangement and the second attachment arrangement. The first attachment arrangement is fixedly attached to a support structure and the second attachment arrangement is arranged to move a first distance essentially vertically in response to a load being exerted on the second attachment arrangement. The invention also relates to a method for changing a spring constant of a spring arrangement in a spring unit.

### BACKGROUND ART

In the use of high-speed boats, impacts resulting from traversing waves can be severe due to the increased speed of the boat. Instead of following the contours of the waves, a high-speed boat can lose contact with the wave, resulting in high drops of up to several meters. This creates a need to protect drivers and occupants from impact forces.

Most existing marine suspension seats have severe functional issues making them dangerous. Too forceful impacts can result in suspensions bottoming out. Bottoming out amplifies, instead of mitigating, the impacts on the occupant. Such functional issues increase the risk of severe injuries and overboard ejections which may lead to fatal accidents.

Both rigid seats and most suspension seats have cushions that often amplify rather than mitigate impacts transmitted from the boat to the seated person. Other issues limiting extensive use relate to the heavy weight and large space requirements for suspension mechanisms. These issues can also arise in various situations on land such as in vehicles travelling over uneven terrain, e.g., rallying or high-speed off-road driving.

Hence, there is a need for an improved suspension with minimum space requirements.

DE 43 14 975 C1 discloses a seat frame comprising a base element, a top element and a spring arrangement between the base and top elements comprising at least two leaf springs arranged one above the other at a spacing from each other and at least approximately parallel to each other. Contact or bearing members are provided for the base element 12 or the top element 14.

US 2006/0061021 A1 discloses a spring system comprising flat plate-springs with one end mounted rigidly to an un-sprung first base and the opposite end mounted rigidly to a sprung second base. The spring system is fitted with cams as strain-control surfaces, mounted tangent to the plate springs and spaced progressively from the said plate-springs beginning at the tangency. The strain-control cams are movable to provide for adjustable spring rates, actively repositioned upon demand therein providing an adaptive active spring-rate system or suspension.

US 2016/0143443 A1 discloses a seating arrangement including a base support, a support arrangement movable between upright and reclined positions, and a spring arrangement that includes a first portion attached to the support arrangement, a second portion attached to the base support and an intermediate portion positioned between the first and second positions. First and second members are configured to bias the support arrangement from the reclined position toward the upright position. The second spring member is spaced from the first spring member, and an adjustment member is positioned between the first and intermediate portions, the adjustment member adjustable between positions that adjust the force exerted by the first and second spring on the support arrangement. Hence, there is a need for an improved suspension with minimum space requirements.

### SUMMARY

An objective of the invention is to provide a spring unit and a method for changing a spring constant of a spring arrangement in a spring unit addressing the issues raised above. The objective is achieved by the seat arrangement of claim 1 and the method of claim 14. Dependent claims provide advantageous example embodiments.

The invention relates to a spring unit, where the spring unit comprises a first attachment arrangement, a second attachment arrangement and a spring arrangement. The spring arrangement comprises a first flexible member attached to and extending between the first attachment arrangement and the second attachment arrangement. The first attachment arrangement is fixedly attached to a support structure and the second attachment arrangement is arranged to move a first distance essentially vertically in response to a load being exerted on the second attachment arrangement. The spring arrangement further comprises a first engagement element arranged to cause a change in a spring constant of the first flexible member, such that when the second attachment arrangement has moved a part of the first distance, the first flexible member comes into contact with the first engagement element, leading to that the spring constant of the first flexible member increases.

One advantage with such a spring unit is that can be designed to have a first spring constant in a movement range of the second attachment arrangement caused by small impacts. When larger impacts are experienced leading to that the second attachment arrangement moves a predetermined part of the first distance, leading to contact between the first flexible element and the engagement element, the increase in the spring constant of the first flexible member will increase the force needed to further bend the first flexible member and move the second attachment arrangement. I.e., when the first flexible member comes into contact with the first engagement element, the stiffness of the first flexible member increases. This improves the shock mitigation of the spring unit for larger impacts, reducing or eliminating the risk of bottoming out, while at the same time providing a spring unit that is easy to install and adapt to specific conditions.

A first area of the first flexible member may be fixedly attached to a first area of the first attachment arrangement. The first engagement element is arranged at a second distance from the first area of the first attachment arrangement in a longitudinal and vertical direction relative the first attachment arrangement such that when the second attachment arrangement has moved a part of the first distance, the first flexible member comes into contact with the first engagement element, thereby increasing the spring constant of the first flexible member by shortening the effective length of the first flexible member.

The first engagement element may comprise a rod extending in a lateral direction and being arranged at the second distance from the first area of the first attachment arrangement, such that when the second attachment arrangement has moved a first distance the first flexible member comes into contact with the rod, thereby increasing the spring constant of the first flexible member by shortening the effective length of the first flexible member. The rod may have any cross-sectional shape, such as for instance circular, oval, quadratic, triangular, rectangular etc.

This provides an easy, yet effective engagement element that can be easily positioned to achieve the desired shortening of the effective length of the flexible member.

The first engagement element may comprise at least one rigid or elastic member shorter than the first flexible member arranged between the first flexible member and the first attachment arrangement. An end portion of the rigid or elastic member extends beyond the first area of the attachment arrangement in a longitudinal direction of the first flexible member to the second distance, such that when the second attachment arrangement has moved at least a part of the first distance, the first flexible member comes into contact with the rigid or elastic member, thereby increasing the spring constant of the first flexible member by shortening the effective length of the first flexible member.

This provides an alternative engagement element whose size can easily be adjusted to achieve the desired shortening of the effective length of the flexible member.

The first flexible member can be mounted or set to various starting points during installation. The range of motion of the second attachment point is approximately 10 - 1000 mm, specifically 125 - 500 mm, more specifically 150 - 250 mm. This corresponds to a range of vertical motion of the seat is approximately 10 - 1000 mm, specifically 125 - 500 mm, more specifically 150 - 250 mm. Range of motions in the order of 10 - 100 mm can for instance be used for shock mitigation in land vehicle seats. Range of motions of 50 - 250 mm can for instance be used in shock mitigation in boat seats. Range of motions of 50 - 1000 mm can for instance be used in vehicle suspensions. A spring unit according to the invention can of course also be used for ranges of motion less than 10 mm and greater than 1000 mm depending on the application.

The first flexible member can be mounted such that the second attachment point, when not experiencing a load being exerted on it, is in any position along the vertical distance. E.g., the first flexible member can be mounted such that second attachment arrangement is arranged to travel vertically the whole first distance in one direction (downwards). Alternatively, the first flexible member can be mounted such that second attachment arrangement is arranged to travel vertically along approximately half the first distance in two directions (upwards and downwards), i.e., the flexible member's rest position is approximately half-way between the maximum and minimum range of travel of the second attachment arrangement.

The end portion of the rigid or elastic member may be curved and, in the longitudinal direction, may be divided into curved end portion parts. Each curved end portion part may comprise a different radius, such that when the second attachment arrangement has moved a first part of the first distance, the first flexible member comes into contact with a first curved end portion part, thereby increasing the spring constant of the first flexible member by shortening the effective length of the flexible member. When the second attachment arrangement has moved a second part of the first distance, the first flexible member comes into contact with a second curved end portion part, thereby further increasing the spring constant of the first flexible member by further shortening the effective length of the flexible member.

This provides a further means for increasing the spring constant in several steps by introducing several points on the engagement element with which the first flexible member can interact.

The first engagement element may comprise a resilient surface such that when the second attachment arrangement has moved a first part of the first distance, the first flexible member comes into contact with the engagement element, thereby increasing the spring constant of the first flexible member by shortening the effective length of the first flexible member. When the second attachment arrangement has moved a second part of the first distance, the resilient surface of the first engagement element is compressed and deformed and a contact area between the first flexible member and the first engagement element increases, further increasing the spring constant of the first flexible member by further shortening the effective length of the first flexible member.

The first engagement element may comprise a resilient element such that when the second attachment arrangement has moved a first part of the first distance, the first flexible member comes into contact with the resilient element, thereby increasing the spring constant of the first flexible member by shortening the effective length of the flexible member. When the second attachment arrangement has moved a second part of the first distance, the resilient element is compressed and deformed and a contact area between the first flexible member and the resilient element increases, further increasing the spring constant of the first flexible member by further shortening the effective length of the flexible member.

A first engagement element comprising a resilient surface or a first engagement element being a resilient element has the advantage that when the second attachment arrangement has moved a second part of the first distance, the resilient surface or resilient element is compressed and deformed becoming more compact and a contact area between the resilient surface or element and the first flexible member increases. This further increases the spring constant of the first flexible member by further shortening the effective length of the flexible member. Additionally, the resilient element provides a smooth transition between the various effective lengths of the first flexible member and can also be designed to add to the increase of the shock mitigating effect of the entire spring unit by that the resilient element requires more force to compress the resilient element further the more it is compressed. This will lead to that the spring constant of the first flexible member will increase non-linearly and/or progressively the more the resilient element is compressed.

The position of the first engagement element can be adjusted in the longitudinal and/or vertical direction to adjust the increase of the spring constant of the first flexible member.

This allows for an adjustment of the increase of the spring constant of the first flexible member.

The spring arrangement may further comprise a second flexible member being attached to and extending between the first attachment arrangement and the second attachment arrangement. Attachment points of the second flexible member to the first and second attachment arrangements are arranged at a third distance essentially vertically above or below attachment points of the first flexible member to the first and second attachment arrangements.

In this way, more stability can be added to the spring unit and the first and second flexible members can cooperate in creating a desired total spring constant of the spring unit. All of the above-described engagement elements can be used for the first and the second flexible member. The first and second flexible member can each have a different type of engagement element that can be individually fine-tuned if necessary.

The first flexible member and the second flexible member may be plates or beams and may be made of any flexible material such as metal, composite, fibre-reinforced composite or a polymer or a combination of such materials. One example of a combination of materials can for instance be a composite reinforced with metal strips running longitudinally along the flexible member. In the description, spring constant is meant to be interchangeable with the stiffness of a cantilever plate or beam as one end of the plate or beam is fixed while the other end of the plate or beam can move freely.

This shape of flexible members is easy to manufacture and adapt and leads to the best effect.

The invention also relates to a seat arrangement, where the seat arrangement comprises a spring unit according to the above description.

Such a seat arrangement will provide good shock mitigation.

The invention also relates to a suspension arrangement, where the suspension arrangement comprises a spring unit according to the above description.

Such a suspension will provide a good shock mitigation.

The invention also relates to a surface vehicle comprising a seat arrangement and/or a suspension arrangement according to the above. Within the context of this application, a surface vehicle is a vehicle that can operate either on a land surface or a surface of a body of water, or both.

A surface vehicle can benefit from either being equipped with a seat arrangement or a suspension arrangement according to the invention or both.

The invention also relates to a method for changing a spring constant of a spring arrangement in a spring unit. The spring unit comprises a first attachment arrangement and a second attachment arrangement. A first flexible member is attached to and extends between the first attachment arrangement and the second attachment arrangement. The method comprises:
- attaching the first attachment arrangement fixedly to a support structure,
- arranging the second attachment arrangement to move a first distance essentially vertically in response to a load being exerted on the second attachment arrangement,
- arranging a spring arrangement comprising a first engagement element in the spring unit arranged to cause a change in a spring constant of the first flexible member, such that the spring constant of the first flexible member increases after the second attachment arrangement has moved at least a part of the first distance.

The method may further comprises:
- attaching a first area of the first flexible member fixedly to a first area of the first attachment arrangement,
- arranging the first engagement element at a second distance from the first area of the first attachment arrangement in a longitudinal and vertical direction such that when the second attachment arrangement has moved at least a part of the first distance, the first flexible member comes into contact with the first engagement element, thereby increasing the spring constant of the first flexible member by shortening the effective length of the flexible member. The method may further comprise:
- adjusting the position of the first engagement element in the longitudinal and/or vertical direction relative to the first flexible member to adjust the increase of the spring constant of the first flexible member.

The vertical position of the first engagement element relative to the first flexible member determines the first distance the first flexible is allowed to move before it comes into contact with the first engagement element. The longitudinal position of the first engagement element essentially determines the magnitude of the increase of the spring constant of the first flexible member after it has come into contact with the first engagement element and thereby the force required to make the first flexible member move further.

The method may further comprise:
- providing the first engagement element with a resilient surface such that when the second attachment arrangement has moved a first part of the first distance, the first flexible member comes into contact with the first engagement element, thereby increasing the spring constant of the first flexible member by shortening the effective length of the flexible member, wherein when the second attachment arrangement has moved a second part of the first distance, the resilient surface is compressed and deformed and a contact area between the first flexible member and the first engagement element increases, further increasing the spring constant of the first flexible member by further shortening the effective length of the flexible member.

The method may further comprise:
- providing the first engagement element with a resilient element such that when the second attachment arrangement has moved a first part of the first distance, the first flexible member comes into contact with the resilient element, thereby increasing the spring constant of the first flexible member by shortening the effective length of the flexible member, where when the second attachment arrangement has moved a second part of the first distance, the resilient element is compressed and deformed and a contact area between the first flexible member and the resilient element increases, further increasing the spring constant of the first flexible member by further shortening the effective length of the flexible member.

A second flexible member extending in a length direction and a width direction may be attached to and extend between the first attachment arrangement and the second attachment arrangement, where the method may further comprise:
- arranging attachment points of the second flexible member at the first and second attachment arrangements at a third distance essentially vertically below or above attachment points of the first flexible member to the first and second attachment arrangements.

### BRIEF DESCRIPTION OF THE DRAWINGS

Figure 1 schematically shows a perspective view of a spring unit according to a first example embodiment,
Figures 2a and 2b schematically shows a side view of a spring unit according to the first example embodiment,
Figure 3 schematically shows a close up of a first variation of the spring arrangement according to the first example embodiment,
Figure 4 schematically shows a close up of a second variation of the spring arrangement according to the first example embodiment,
Figure 5 schematically shows a close up of a third variation of the spring arrangement according to the first example embodiment,
Figure 6 schematically shows a close up of a fourth variation of the spring arrangement according to the first example embodiment,
Figures 7a and 7b schematically shows a side view of a spring unit according to a second example embodiment,
Figures 8a and 8b schematically shows a side view of a spring unit according to the third example embodiment,
Figure 9 schematically shows a side view of a seat comprising the spring arrangement according to the third example embodiment.

### DETAILED DESCRIPTION

Within the context of this application, a surface vehicle is a vehicle that can operate either on a land surface or a surface of a body of water, or both. Non-limiting examples of surface vehicles are sailboats such as a sailing yacht, motorboats such as a go-fast boat or a wheeled or tracked land vehicle such as sandrails, dune buggies or tanks. Hovercrafts is one non-limiting example of a surface vehicle that can operate on both a land surface and a surface of a body of water.

For a definition of a go-fast boat, see for instance https://en.wikipedia.org/wiki/Go-fast_boat or https://www.discoverboating.com/resources/go-fast-boats. These types of boats include rigid-hulled inflatable boat (RHIB) often used by law enforcement and military. The seat arrangement can also be used to good effect in surface vehicles that operate on land, especially where the there is a need to traverse uneven terrain and/or roads.

In the description, a coordinate system x, y, z (lowercase) where the x-axis is a longitudinal axis extending along the length of the spring unit 1, the y-axis is a transverse axis extending from side to side of the spring unit 1 and the z-axis is the vertical axis extending along the height of the spring unit 1. This coordinate system is used e.g., to describe the spatial relationship between various parts of the spring unit 1 and the direction of forces. The coordinate system is centred on the midpoint of the part of the attachment arrangement where the horizontal and vertical base plates are attached. A longitudinal direction is thus a direction along the x-axis (x-direction), a lateral direction is thus a direction along the y-axis (y-direction) and a vertical direction is thus a direction along the z-axis (z-direction).

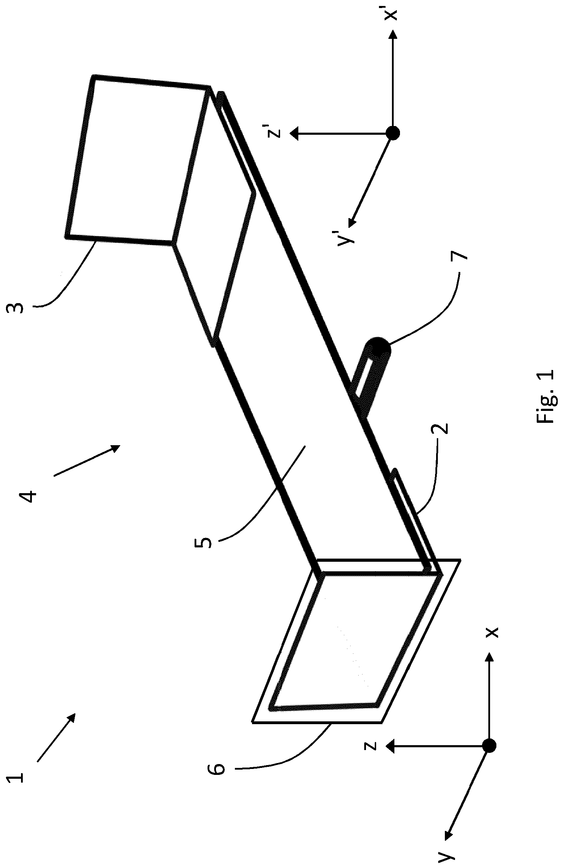

Figure 1 schematically shows a perspective view of a spring unit 1 according to a first example embodiment. The spring unit 1 comprises a first attachment arrangement 2, a second attachment arrangement 3 and a spring arrangement 4. The spring arrangement 4 comprises a first flexible member 5 attached to and extending between the first attachment arrangement 2 and the second attachment arrangement 3. The first attachment arrangement 2 is fixedly attached to a support structure 6. The second attachment arrangement 3 is arranged to move a first distance L_1 essentially vertically along the z-axis in response to a load being exerted on the second attachment arrangement 3. The spring arrangement 4 further comprises a first engagement element 7 arranged to cause a change in a spring constant of the first flexible member 5, such that the spring constant of the spring arrangement 4 increases after the second attachment arrangement 3 has moved a part of the first distance L_1. The first engagement element 7 is for instance attached to the first attachment arrangement 2 or to the vehicle itself. If the first engagement element 7 is attached to the vehicle itself, it can be attached to the vehicle directly or to a separate rigging that in turn is dampened. In figure 1, a bracket is schematically illustrated as a means to fasten the spring unit 1 to a vehicle, e.g., the bracket is intended as an example of a support structure 6. The change in spring constant can be made to achieve non-linear spring characteristics of the first flexible member 5 such that the spring constant can change during movement of the second attachment arrangement 3.

With support structure is meant for instance a rigid structure such as a frame or bracket that can be an integral part of a vehicle or that can be rigidly attached to the vehicle. The attachment arrangement is in the most rudimentary example made of a bracket 8 comprising a horizontal base plate 8a extending in the x-y plane attached at one end to a vertical base plate 8b extending in the y-z plane. Two vertical mounting plates extending in the x-z plane attached to the horizontal and vertical base plates at each lateral end (not shown) make up the attachment arrangements. The first flexible member 5 is arranged in a space created between the above-mentioned plates.

The first flexible member 5 is a rectangular or quadratic plate or beam with a thickness in a vertical or z-direction smaller than a thickness in a lateral or y-direction and a length in the longitudinal or x-direction longer than the thickness in a lateral or y-direction. The first flexible member 5 may be made of any flexible material such as metal, composite, fibre-reinforced composite or a polymer or a combination of such materials. In the description, spring constant is meant to be interchangeable with the stiffness of a cantilever plate or beam as one end of the plate or beam making up the flexible member 5 is fixed while the other end of the plate or beam can move freely.

The various plates of the attachment arrangement can be made of a material such as metal, composite, fibre-reinforced composite or a polymer or a combination of such materials. The horizontal and/or vertical base plates are arranged to attach to the support structure 6.

In the context of the invention, vertically means along the z-axis of the x, y, z-coordinate system of figure 1. As mentioned, the axes of the x, y, z-coordinate system are aligned relative to the spring unit 1. This means that if the spring unit 1 is arranged in a way such that the axes of the coordinate system are not aligned with axes x', y', z' of a coordinate system that are aligned relative to a vehicle to which the spring unit 1 is attached, vertically means along the z-axis of the coordinate system of the spring unit 1, not the z'-axis of the coordinate system of the vehicle. The same holds also for the longitudinal (along the x-axis) and lateral (along the y-axis) directions. The second attachment arrangement 3 can for instance be attached to a seat such as an office chair or a vehicle seat, a wheel of a vehicle suspension or to any other part of a vehicle where a progressive shock mitigation can be desirable.

As mentioned above, by having a spring unit 1 with a spring arrangement 4 comprising a first engagement element 7, the first flexible member 5 can be made to have a varying spring constant, before and after the second attachment arrangement 3 has moved a part of the first distance L_1. In this way, the shock mitigating effect of the spring unit 1 can be made to increase if the second attachment arrangement 3 moves beyond a certain distance.

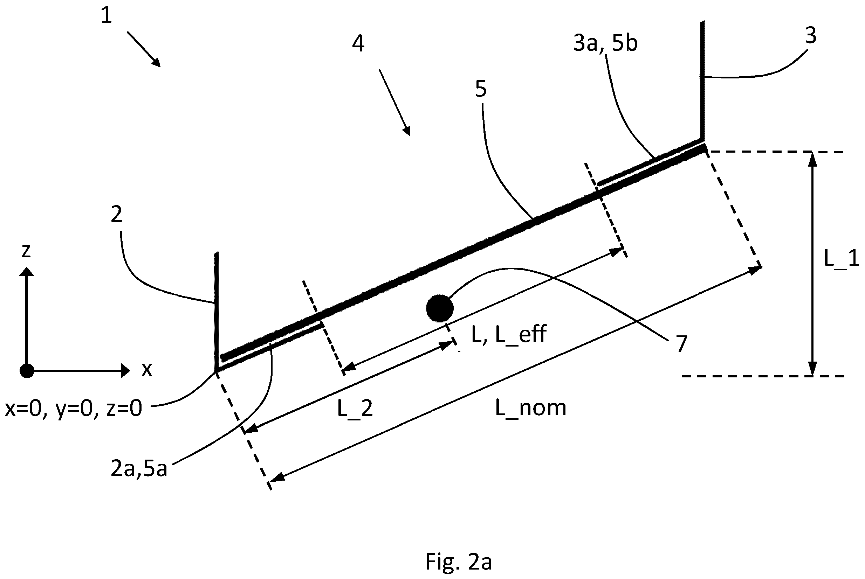

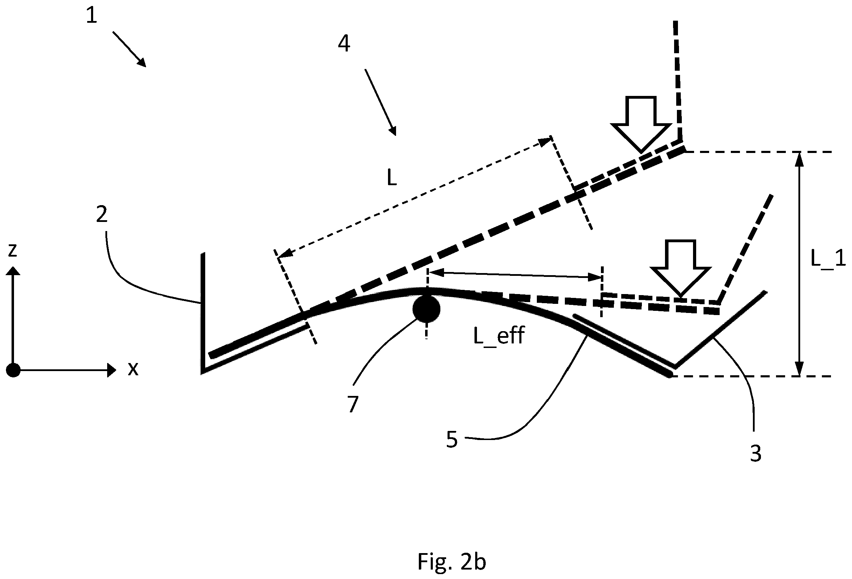

Figures 2a and 2b schematically shows a side view of a spring unit 1 according to the first example embodiment. The first flexible member 5 is attached to the first attachment arrangement 2 and to the second attachment arrangement 3 by adhesive, fasteners such as a screw or bolt and nut or by a clamped attachment (not shown) and has a nominal length L_nom, i.e., the length of the first flexible member 5 as measured from end to end, and a nominal flexible length L, i.e., the length of the first flexible member that is not attached to the first and second attachment arrangements 2, 3 and that is initially capable of flexing under a load.

In figure 2a, it is shown that a first area 5a of the first flexible member 5 is fixedly attached to a first area 2a of the first attachment arrangement 2. Similarly, a second area 5b of the first flexible member 5 is fixedly attached to a first area 3a of the second attachment arrangement 3. In this way, a part of each end, i.e., areas 2a, 3a of the first flexible member 5 is securely attached to each attachment arrangement 2, 3 respectively. The first and second attachment arrangements 2, 3 are merely schematically illustrated and it is to be understood that they can be adapted to be mounted to e.g., a vehicle and to a seat, suspension or similar respectively. Depending on the application, the first and second attachment arrangements 2, 3 can be identical in design or differently designed.

The first engagement element 7 is arranged at a second distance L_2 from the first attachment arrangement 2 in a longitudinal or x-direction and vertical or z-direction relative the first attachment arrangement 2 such that when the second attachment arrangement 3 has moved a part of the first distance L_1, the first flexible member 5 comes into contact with or engages with the first engagement element 7, thereby increasing the spring constant of the first flexible member 5 by shortening an effective length L_eff of the first flexible member 5.

The second distance L_2 can for instance be measured from an end point of the first area 2a of the first attachment arrangement 2 or, as shown in the figure, from the centre of the spring unit's 1 coordinate system (x=0, y=0, z=0), which point is marked in the figure for illustration purposes.

With effective length, L_eff, is meant the length of the first flexible member 5 that is allowed to flex when a load is exerted on the second attachment arrangement 2. When a small load is exerted, the entire length of the first flexible member 5 that is not attached to the first attachment arrangement 2 is allowed to flex. In this case, L_eff = L. However, as soon as the first flexible member 5 comes into contact with the first engagement element 7, a part of the first flexible member 5 between the first area 5a of the first flexible member 5 and the first engagement element 7 is effectively made stationary and thus, the length of the first flexible member 5 that is allowed to flex under continued exertion by a load is now the length as measured from the first engagement element 7 instead, i.e., L_eff < L. The part of the first flexible member 5 between the first area 2a of the first attachment arrangement 2 and the first engagement element 7 will rebound or flex upwardly slightly in response to the engagement with the first engagement element 7, but this is negligible compared to the effect of the shortening of the first flexible member 5.

The first flexible member 5 is shown in figure 2a in an inactive state, i.e., a state where there is no external load being exerted on the second attachment arrangement 3, and in figure 2b in an active state, i.e., when an external load is exerted on the second attachment arrangement 3 as indicated by a downward pointing arrow. The external load is not necessarily only directed downwards along the z-direction of the spring unit 1, but only a downward component is shown for illustrative purposes. The effective length L_eff of the first flexible member 5 can be seen to be the entire length of the first flexible member 5 extending between the first and second attachment arrangements 2, 3, i.e., L_eff = L.

As can be seen in figure 2b, when the second attachment arrangement 3 has moved a part of the first distance L_1, the first flexible member 5 has flexed downward such that it comes into contact with the first engagement element 7. As described above, the engagement with the first engagement element 7 causes an increase of the spring constant of the spring arrangement 4 by shortening the effective length L_eff of the first flexible member 5. The effective length L_eff of the first flexible member 5 can be seen to be the length of the first flexible member 5 between where the first flexible member 5 comes into contact with the first engagement element 7 and the second attachment arrangement 3, i.e., L_eff < L.

In the following figures, close ups of the first attachment arrangement 2 and the part of the first flexible member 5 closest to it will be shown to illustrate various ways to achieve the above-described effect.

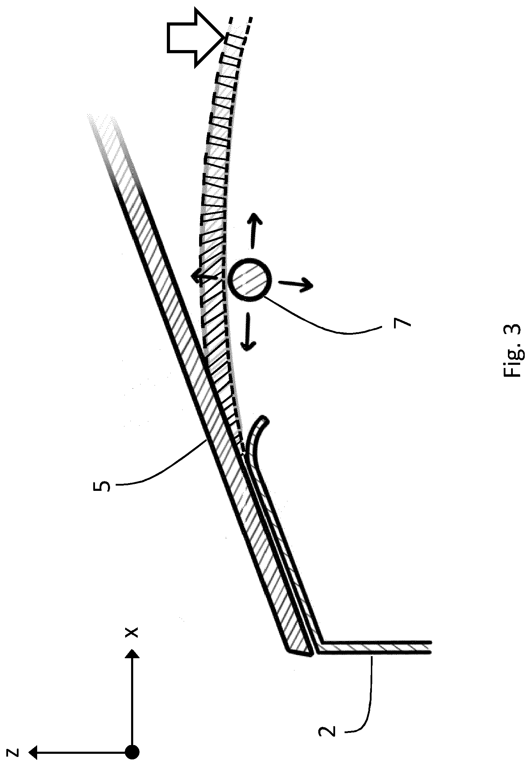

Figure 3 schematically shows a close up of a first variation of the spring arrangement 4 according to the first example embodiment. In figure 3, the first engagement element 7 comprises a rod extending in the lateral or y-direction. The first flexible member 5 is shown both in the inactive state (solid lines), and the active state (dashed lines). As can be seen, when the second attachment arrangement 3 has moved a part of the first distance L_1, the first flexible member 5 has flexed such that it comes into contact with the rod. As described above, the engagement with the rod causes an increase of the spring constant of the spring arrangement 4 by shortening the effective length L_eff of the first flexible member 5.

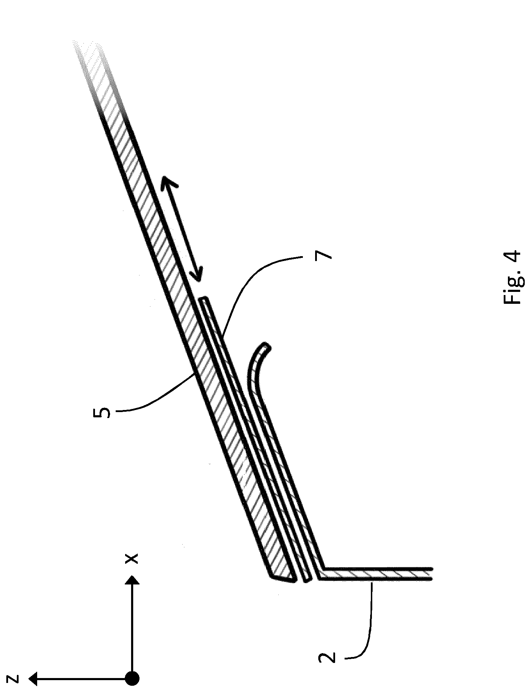

Figure 4 schematically shows a close up of a second variation of the spring arrangement 4 according to the first example embodiment. In figure 4, the first engagement element 7 comprises a rigid or elastic member extending in the lateral or y-direction and placed below the first flexible member 5. The first flexible member 5 is shown in the inactive state. As described above, the engagement with the rigid or elastic member causes an increase of the spring constant of the spring arrangement 4 by shortening the effective length L_eff of the first flexible member 5. As can be seen, the length and/or end position of the rigid or elastic member can be adapted along the length direction of the first flexible member 5 in order to obtain the desired increase in the spring constant of the spring arrangement 4 when the first flexible member 5 comes into contact with the rigid or elastic member, for instance by changing its position or size.

Depending on the desired increase of the spring constant, a rigid member or an elastic member can be selected. The rigid or elastic members can be made of a material such as metal, composite, fibre-reinforced composite or a polymer or a combination of such materials. The rigid or elastic members can be made of the same material as the first flexible member 5, but it is not necessary.

Several rigid or elastic members being made of the same or different materials can be stacked on top of each other, further adding to the increase of the spring constant.

Several rigid or elastic members can also be placed side by side in the lateral or y-direction being made of the same or different materials to be able to increase the spring constant in various ways depending on if the load exerted on the attachment arrangement is at an oblique angle or not. In this variation, the rigid or elastic members can be made up of one or more strips or plates, covering the entire width of the first flexible member 5.

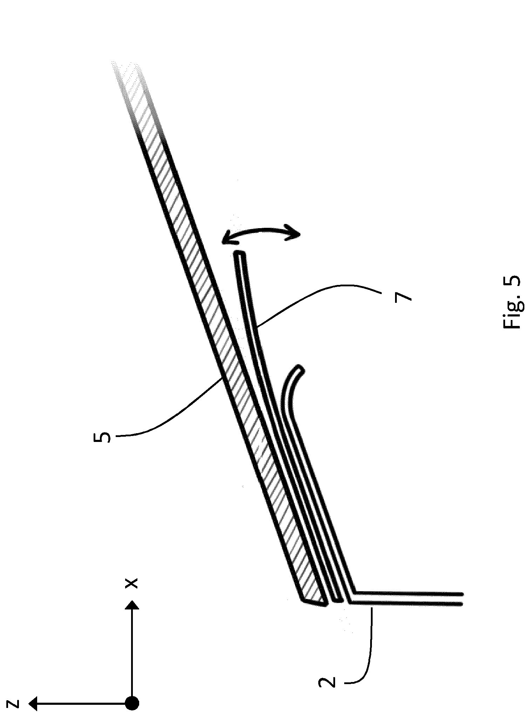

Figure 5 schematically shows a close up of a third variation of the spring arrangement 4 according to the first example embodiment. As a variation to the first engagement element 7 of figure 4, an end portion of the rigid or elastic member can be curved and, in the longitudinal or x-direction direction, be divided into curved end portion parts. Each curved end portion part may comprise a different radius, such that when the second attachment arrangement 3 has moved a first part of the first distance L_1, the first flexible member 5 comes into contact with a first curved end portion part, thereby increasing the spring constant of the first flexible member 5 by shortening the effective length L_eff of the flexible member. When the second attachment arrangement 3 has moved a second part of the first distance L_1, the first flexible member 5 comes into contact with a second curved end portion part, thereby further increasing the spring constant of the first flexible member 5 by further shortening the effective length L_eff of the flexible member. For simplicity, only one curved end portion of the rigid or elastic member is shown. This is a way to increase the vertical distance to the first flexible member 5 such that it comes into contact with the first engagement element 7 when the second attachment arrangement 3 has travelled a further distance than in figure 4.

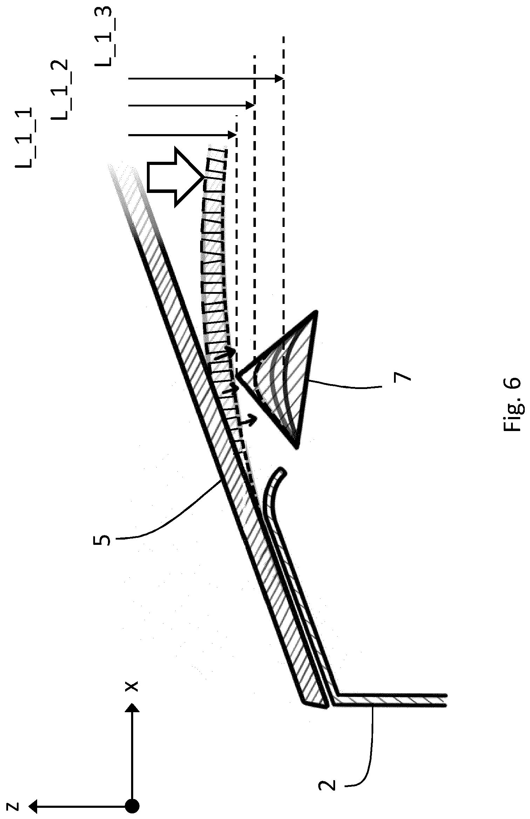

Figure 6 schematically shows a close up of a fourth variation of the spring arrangement 4 according to the first example embodiment. In this example embodiment, the first engagement element 7 comprises a resilient element extending in the lateral or y-direction. The resilient element functions such that when the second attachment arrangement 3 has moved a first part L_1_1 of the first distance L_1, the first flexible member 5 comes into contact with the resilient element similar to what is described above. In figure 6, the beginning of the engagement is illustrated by the position of the first flexible member 5 with dashed lines.

According to the above description, the engagement with the resilient element increases the spring constant of the first flexible member 5 by shortening the effective length L_eff of the flexible member, at least to a small degree. However, the resilient element further has the advantage that when the second attachment arrangement 3 has moved a second part L_1_2 of the first distance L_1, the resilient element compresses as illustrated by the dashed line inside the resilient element, and a contact area between the resilient element and the first flexible member 5 increases, further increasing the spring constant of the first flexible member 5 by further shortening the effective length of the flexible member. Once the second attachment arrangement has moved a third part L_1_3 of the first distance L_1, the resilient element cannot compress any further and now functions as an essentially rigid first engagement element 7. In this way, the resilient element provides a smooth transition between various effective lengths of the first flexible member 5 and can also be designed to add to the increase of the shock mitigating effect of the entire spring unit 1 by that the resilient element requires more force to compress the resilient element further the more it is compressed. This will lead to that the spring constant will increase non-linearly and/or progressively the more the resilient element is compressed.

By adapting material properties of the resilient element such as the shore number and the cross-sectional shape, the resilient element will further affect the characteristics of the spring unit 1. The resilient element may have any cross-sectional shape, such as for instance circular, oval, quadratic, triangular, rectangular etc. Alternatively, the first engagement element 7 may comprise a resilient surface that can be compressed and deformed when the first flexible member 5 has moved the second part L_1_2 of the first distance L_1, leading to that a contact area between the first engagement element 7 and the first flexible member 5 increases, further increasing the spring constant of the first flexible member 5 by further shortening the effective length of the flexible member 5.

The resilient surface or element can be made of the same materials as listed above, but can also be made of other resilient materials such as for example polyurethane, rubber or silicone or blends thereof. The resilient surface is at least 0.25 millimetres thick, more specifically 0.5 mm thick. A thicker surface reduces any noise from when the first flexible member 5 makes contact with the first engagement element 7. Alternatively put, the first engagement element 7 may comprise resilient material on the surface of the first engagement element 7, as a resilient surface according to the above, all the way through resilient material making up the entirety of the first engagement element 7.

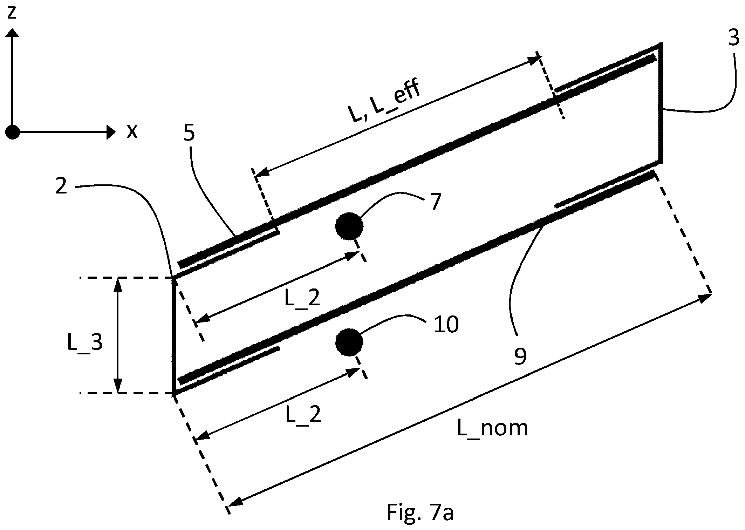

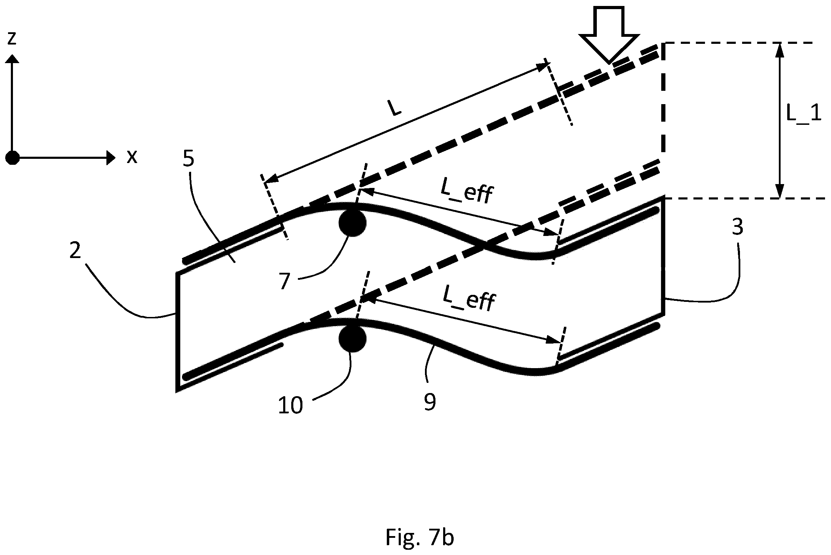

Figures 7a and 7b schematically shows a side view of a spring unit 1 according to a second example embodiment. The spring unit 1 may further comprise a second flexible member 9 attached to and extending between the first attachment arrangement 2 and the second attachment arrangement 3. Attachment points of the second flexible member 9 to the first and second attachment arrangements 2, 3 are arranged at a third distance essentially vertically below or above attachment points of the first flexible member 5 to the first and second attachment arrangements 2, 3. A second engagement element 10 similar to the first engagement element 7 as described in conjunction with the example embodiments above can be added to the spring arrangement 4 to come into contact with the second flexible member 9. The second engagement element 10 can be arranged in the same relative position to the second flexible member 9 as the first engagement element 7 relative the first flexible member 5 or be arranged in a different position relative the second flexible member 9 than the first engagement element 7. In figure 7a, the second engagement element 10 is in the same relative position to the second flexible element as the first engagement element 7 is to the first flexible element. The first and second flexible members 5, 9 are shown in figure 7a in an inactive state.

The second flexible member 9 is attached to the first attachment arrangement 2 and to the second attachment arrangement 3 by one of the attachments mentioned above in relation to the first attachment arrangement. The second flexible member 9 is a rectangular or quadratic plate or beam with a thickness in a vertical or z-direction smaller than a thickness in a lateral or y-direction and a length in the longitudinal or x-direction direction longer than the thickness in a lateral or y-direction. The second flexible member 9 may be made of any flexible material such as metal, composite, fibre-reinforced composite or a polymer or a combination of such materials. In the description, spring constant is meant to be interchangeable with the stiffness of a cantilever plate or beam as one end of the plate or beam making up the flexible members is fixed while the other end of the plate or beam can move freely.

The first and second flexible members 5, 9 are shown in figure 7b in an active state. As can be seen, both the first and second flexible members 5, 9 have come into contact with the respective first and second engagement elements 7, 10, thereby shortening the effective length L_eff of both the first and second flexible elements, causing an increase in the spring constant of both the first and second flexible elements. That second areas of the first and second flexible members 5, 9 are attached to the second attachment arrangement 3 causes the bending of the first and second flexible members 5, 9 according to the figure.

The second flexible member 9 are attached to the first attachment arrangement 2 and the second attachment arrangement 3 by adhesive, fasteners or by a clamped attachment similar to the first flexible member 5. Different attachment methods can be chosen for the respective first and second flexible members 5, 9.

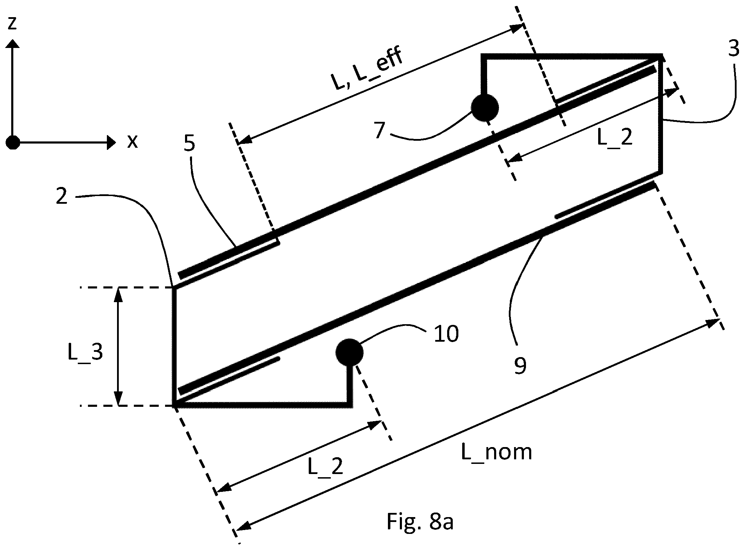

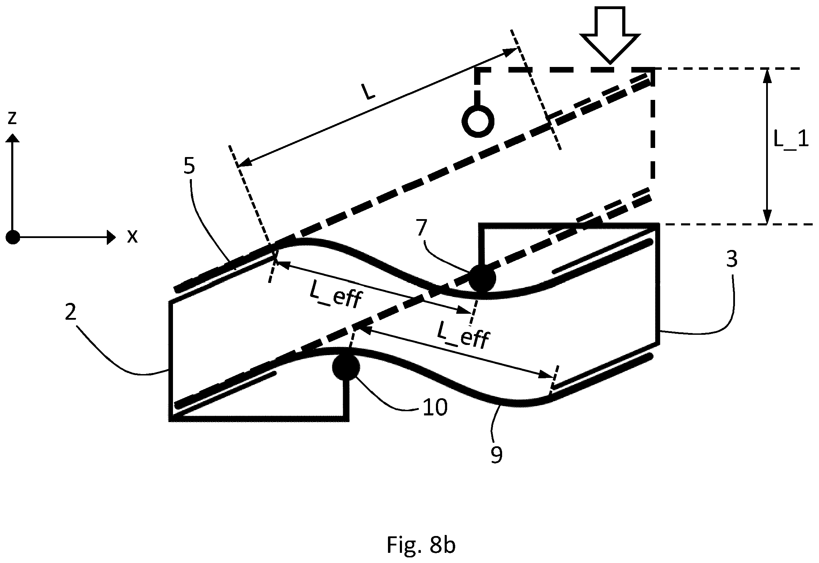

Figures 8a and 8b schematically shows a side view of a spring unit 1 according to a third example embodiment. The spring unit 1 of figures 8a and 8b comprises the second flexible member 9 attached to and extending between the first attachment arrangement 2 and the second attachment arrangement 3 similar to the embodiment shown in figures 7a and 7b. The second engagement element 10 similar to the first engagement element 7 as described in conjunction with the example embodiments above is added to the spring arrangement 4 to come into contact with the second flexible member 9. The second engagement element 10 is arranged in a mirrored position relative to the second flexible member 9 compared to the position of the first engagement element 7 relative the first flexible member 5 by for instance being arranged on a bracket attached to the second attachment arrangement 3. This means that the second engagement element 10 is arranged at the same distance from the second attachment arrangement 3 as the first engagement element 7 is arranged from the first attachment arrangement 2 with the exception that the second engagement element 10 is arranged above the second flexible member 9 in the z-direction. The first and second flexible members 5, 9 are shown in figure 8a in an inactive state.

In figure 8b, the first and second flexible members 5, 9 are shown in an active state. When the second attachment arrangement 3 experiences a load, the second engagement element 10 moves downwards with the second attachment arrangement and comes into contact with the first flexible member 5 after the second attachment arrangement 3 has moved at least a part of the first distance L_1. As can be seen, both the first and second flexible members 5, 9 have come into contact with the respective first and second engagement elements 7, 10, thereby shortening the effective length L_eff of both the first and second flexible elements, causing an increase in the spring constant of both the first and second flexible elements.

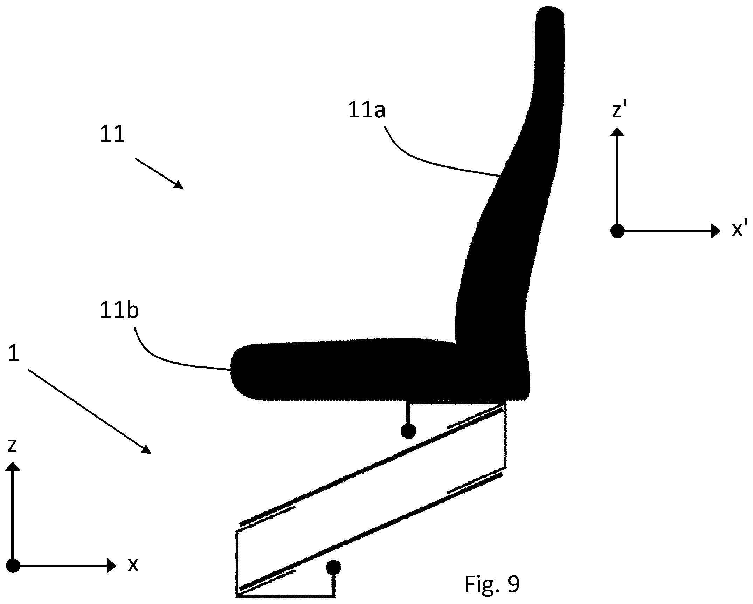

Figure 9 schematically shows a seat arrangement 11 comprising a spring unit 1 according to the third embodiment of the invention.

As can be seen, the spring unit 1 is arranged beneath the seat arrangement 11 in order to provide shock mitigation to the seat. Of course, both the first and second embodiments as shown above can alternatively be installed with the seat arrangement 11. The seat arrangement 11 of figure 9 has an integrated seat back 11a and seat pan 11b. It is also possible for the seat arrangement 11 to comprise only a seat pan 11b or to comprise a seat back 11a that is separate from the seat pan 11b. Again, for reference, the seat arrangement's (and thereby the vehicle's) coordinate system x', y', z' as well as the spring unit's 1 coordinate system x, y, z is shown in figure 9. In figure 9, the seat arrangement 11 does not experience any weight and is therefore in an inactive state. Means for fastening the spring unit 1 to the vehicle is not shown.

In addition to the engagement elements 7, 10, when using fasteners or a clamped attachment, the effective length L_eff of the first and second flexible members 5, 9 can be shortened by loosening the fasteners or the clamped attachment and shortening the distance between the second attachment arrangement 3 and the first attachment arrangement 2 before reattaching the flexible members. This can also be done when using one flexible member.

Reference signs mentioned in the claims should not be seen as limiting the extent of the matter protected by the claims, and their sole function is to make claims easier to understand.

As will be realized, the spring unit as described above is capable of modification in various obvious respects, all without departing from the scope of the appended claims. For instance, when the spring unit is arranged in a suspension arrangement of a surface vehicle, the spring units orientation may need to be changed in order to achieve the desired suspension effect of the suspension arrangement. For example, the spring unit may be arranged such that the second attachment arrangement's movement is essentially the opposite, of what is illustrated in the figures, i.e. essentially upwards along the z-axis. Accordingly, the drawings and the description thereto are to be regarded as illustrative in nature, and not restrictive.

### REFERENCES

1. Spring unit
2. First attachment arrangement
2a. First area of the first attachment arrangement
3. Second attachment arrangement
3a. First area of the second attachment arrangement
4. Spring arrangement
5. First flexible member
5a. First area of first flexible member
5b. Second area of first flexible member
6. Support structure
7. First engagement element
8. Bracket
8a. Horizontal base plate
8b. Vertical base plate
9. Second flexible member
10. Second engagement element
11. Seat arrangement
11a. Seat back
11b. Seat pan
L: length
L_1: first distance
L_1_1: first part of first distance
L_1_2: second part of first distance
L_1_3: Third part of first distance
L_2: second distance
L_3: third distance
L_eff: effective length

## Claims

1. Spring unit (1), wherein the spring unit (1) comprises a first attachment arrangement (2), a second attachment arrangement (3) and a spring arrangement (4), wherein the spring arrangement (4) comprises a first flexible member (5) attached to and extending between the first attachment arrangement (2) and the second attachment arrangement (3), wherein the first attachment arrangement (2) is fixedly attached to a support structure (6) and wherein the second attachment arrangement (3) is arranged to move a first distance (L_1) essentially vertically in response to a load being exerted on the second attachment arrangement (3), wherein the spring arrangement (4) further comprises a first engagement element (7) arranged to cause a change in a spring constant of the first flexible member (5), such that when the second attachment arrangement (3) has moved a part of the first distance (L_1), the first flexible member (5) comes into contact with the first engagement element (7), leading to that the spring constant of the first flexible member (5) increases, **characterized in that** the first engagement element (7) comprises a resilient surface such that when the second attachment arrangement (3) has moved a first part of the first distance (L_1), the first flexible member (5) comes into contact with the first engagement element (7), thereby increasing the spring constant of the first flexible member (5) by shortening the effective length (L_eff) of the first flexible member (5), wherein when the second attachment arrangement (3) has moved a second part of the first distance (L_1), the resilient surface of the first engagement element (7) is compressed and deformed and a contact area between the first flexible member (5) and the first engagement element (7) increases, further increasing the spring constant of the first flexible member (5) by further shortening the effective length (L_eff) of the first flexible member (5).

2. Spring unit (1) according to claim 1, wherein a first area (5a) of the first flexible member (5) is fixedly attached to a first area (2a) of the first attachment arrangement (2), wherein the first engagement element (7) is arranged at a second distance (L_2) from the first area (2a) of the first attachment arrangement (2) in a longitudinal or x-direction and vertical or z-direction relative the first attachment arrangement (2) such that when the second attachment arrangement (3) has moved a part of the first distance (L_1), the first flexible member (5) comes into contact with the first engagement element (7), thereby increasing the spring constant of the first flexible member (5) by shortening the effective length (L_eff) of the first flexible member (5).

3. Spring unit (1) according to claim 2, wherein the first engagement element (7) comprises a rod extending in a lateral or y-direction and being arranged at the second distance (L_2) from the first area of the first attachment arrangement (2), such that when the second attachment arrangement (3) has moved a first distance (L_1) the first flexible member (5) comes into contact with the rod, thereby increasing the spring constant of the first flexible member (5) by shortening the effective length (L_eff) of the flexible member.

4. Spring unit (1) according to any one of claims 2 or 3, wherein the first engagement element (7) comprises at least one rigid or elastic member shorter than the first flexible member (5) arranged between the first flexible member (5) and the first attachment arrangement (2), wherein an end portion of the rigid or elastic member extends beyond the first area (2a) of the first attachment arrangement (2) in a longitudinal or x-direction of the first flexible member (5) to the second distance (L_2), such that when the second attachment arrangement (3) has moved at least a part of the first distance (L_1), the first flexible member (5) comes into contact with the rigid or elastic member, thereby increasing the spring constant of the first flexible member (5) by shortening the effective length (L_eff) of the first flexible member (5).

5. Spring unit (1) according to claim 4, wherein the end portion of the rigid or elastic member is curved and, in the longitudinal or x-direction, is divided into curved end portion parts, wherein each curved end portion part comprises a different radius, such that when the second attachment arrangement (3) has moved a first part of the first distance (L_1), the first flexible member (5) comes into contact with a first curved end portion part, thereby increasing the spring constant of the first flexible member (5) by shortening the effective length (L_eff) of the first flexible member (5), wherein when the second attachment arrangement (3) has moved a second part of the first distance (L_1), the first flexible member (5) comes into contact with a second curved end portion part, thereby further increasing the spring constant of the first flexible member (5) by further shortening the effective length (L_eff) of the first flexible member (5).

6. Spring unit (1) according to any one of the preceding claims 1-5, wherein the first engagement element (7) is a resilient element such that when the second attachment arrangement (3) has moved a first part of the first distance (L_1), the first flexible member (5) comes into contact with the resilient element, thereby increasing the spring constant of the first flexible member (5) by shortening the effective length (L_eff) of the first flexible member (5), wherein when the second attachment arrangement (3) has moved a second part of the first distance (L_1), the resilient element is compressed and deformed and a contact area between the first flexible member (5) and the first resilient element (7) increases, further increasing the spring constant of the first flexible member (5) by further shortening the effective length (L_eff) of the first flexible member (5).

7. Spring unit (1) according to any one of claims 1-6, wherein a position of the first engagement element (7) can be adjusted in the longitudinal or x-direction and/or vertical or z-direction to adjust the increase of the spring constant of the first flexible member (5).

8. Spring unit (1) according to any one of the preceding claims, wherein the spring arrangement (4) further comprises a second flexible member (9) attached to and extending between the first attachment arrangement (2) and the second attachment arrangement (3), wherein attachment points of the second flexible member (9) to the first and second attachment arrangements (2, 3) are arranged at a third distance essentially vertically below or above attachment points of the first flexible member (5) to the first and second attachment arrangements (2, 3).

9. Seat arrangement, wherein the seat arrangement comprises a spring unit (1) according to any one of the preceding claims.

10. Suspension arrangement for a vehicle such as a surface or land vehicle, wherein the suspension arrangement comprises a spring unit (1) according to any one of the preceding claims 1-8.

11. Method for changing a spring constant of a spring arrangement (4) in a spring unit (1), wherein the spring unit (1) comprises a first attachment arrangement (2) and a second attachment arrangement (3), wherein a first flexible member (5) is attached to and extending between the first attachment arrangement (2) and the second attachment arrangement (3), wherein the method comprises:
- attaching the first attachment arrangement (2) fixedly to a support structure (6),
- arranging the second attachment arrangement (3) to move a first distance (L_1) essentially vertically in response to a load being exerted on the second attachment arrangement (3),
- arranging a spring arrangement (4) comprising a first engagement element (7) in the spring unit (1) arranged to cause a change in a spring constant of the first flexible member (5), such that the spring constant of the first flexible member (5) increases after the second attachment arrangement (3) has moved at least a part of the first distance (L_1),
- providing the first engagement element (7) with a resilient surface such that when the second attachment arrangement (3) has moved a first part (L_1_1) of the first distance (L_1), the first flexible member (5) comes into contact with the resilient element, thereby increasing the spring constant of the first flexible member (5) by shortening the effective length (L_eff) of the flexible member, wherein when the second attachment arrangement (3) has moved a second part (L_1_2) of the first distance (L_1), the resilient surface is compressed and deformed and a contact area between the first flexible member (5) and the first engagement element (7) increases, further increasing the spring constant of the first flexible member (5) by further shortening the effective length (L_eff) of the flexible member.

12. Method according to claim 11, wherein the method comprises:
- attaching a first area (5a) of the first flexible member (5) fixedly to a first area (2a) of the first attachment arrangement (2),
- arranging the first engagement element (7) at a second distance (L_2) from the first area (2a) of the first attachment arrangement (2) in a longitudinal or x-direction and vertical or z-direction such that when the second attachment arrangement (3) has moved at least a part of the first distance (L_1), the first flexible member (5) comes into contact with the first engagement element (7), thereby increasing the spring constant of the first flexible member (5) by shortening the effective length (L_eff) of the first flexible member (5).

13. Method according to claim 11 or 12, wherein the method comprises:
- adjusting the position of the first engagement element (7) in the longitudinal or x-direction and/or vertical or z-direction of the flexible member to adjust the increase of the spring constant of the first flexible member (5).

14. Method according to any one of claims 11-13, wherein the method comprises:
- providing the first engagement element (7) with a resilient element such that when the second attachment arrangement (3) has moved a first part (L_1_1) of the first distance (L_1), the first flexible member (5) comes into contact with the resilient element, thereby increasing the spring constant of the first flexible member (5) by shortening the effective length (L_eff) of the flexible member, wherein when the second attachment arrangement (3) has moved a second part (L_1_2) of the first distance (L_1), the resilient element is compressed and deformed and a contact area between the first flexible member (5) and the first engagement element (7) increases, further increasing the spring constant of the first flexible member (5) by further shortening the effective length (L_eff) of the flexible member.

15. Method according to any one of claims 11-14, wherein a second flexible member (9) attached is to and extending between the first attachment arrangement (2) and the second attachment arrangement (3), wherein the method comprises:
- arranging attachment points of the second flexible member (9) at the first and second attachment arrangements (2, 3) at a third distance essentially vertically below or above attachment points of the first flexible member (5) to the first and second attachment arrangements (2, 3).

## Patentansprüche

1. Federeinheit (1), wobei die Federeinheit (1) eine erste Befestigungsanordnung (2), eine zweite Befestigungsanordnung (3) und eine Federanordnung (4) umfasst, wobei die Federanordnung (4) ein erstes flexibles Element (5) umfasst, das an der ersten Befestigungsanordnung (2) und der zweiten Befestigungsanordnung (3) befestigt ist und sich zwischen diesen erstreckt, wobei die erste Befestigungsanordnung (2) fix an einer Tragstruktur (6) befestigt ist und wobei die zweite Befestigungsanordnung (3) ausgelegt ist, um sich als Reaktion auf eine auf die zweite Befestigungsanordnung (3) ausgeübte Last um einen ersten Abstand (L_1) im Wesentlichen vertikal zu bewegen, wobei die Federanordnung (4) ferner ein erstes Eingriffselement (7) umfasst, das ausgelegt ist, um eine Änderung einer Federkonstante des ersten flexiblen Elements (5) zu bewirken, wenn sich die zweite Befestigungsanordnung (3) um einen Teil des ersten Abstands (L_1) bewegt hat, das erste flexible Element (5) mit dem ersten Eingriffselement (7) in Berührung gelangt, wodurch sich die Federkonstante des ersten flexiblen Elements (5) erhöht, **dadurch gekennzeichnet, dass** das erste Eingriffselement (7) eine nachgiebige Oberfläche umfasst, so dass, wenn sich die zweite Befestigungsanordnung (3) um einen ersten Teil des ersten Abstands (L_1) bewegt hat, das erste flexible Element (5) mit dem ersten Eingriffselement (7) in Berührung gelangt, wodurch die Federkonstante des ersten flexiblen Elements (5) erhöht wird, indem die effektive Länge (L_eff) des ersten flexiblen Elements (5) verkürzt wird, wobei, wenn sich die zweite Befestigungsanordnung (3) um einen zweiten Teil des ersten Abstands (L_1) bewegt hat, die nachgiebige Oberfläche des ersten Eingriffselements (7) komprimiert und verformt wird und sich eine Kontaktfläche zwischen dem ersten flexiblen Element (5) und dem ersten Eingriffselement (7) vergrößert, wodurch die Federkonstante des ersten flexiblen Elements (5) weiter erhöht wird, indem die effektive Länge (L_eff) des ersten flexiblen Elements (5) weiter verkürzt wird.

2. Federeinheit (1) nach Anspruch 1, wobei ein erster Bereich (5a) des ersten flexiblen Elements (5) fix an einem ersten Bereich (2a) der ersten Befestigungsanordnung (2) befestigt ist, wobei das erste Eingriffselement (7) in einem zweiten Abstand (L_2) von dem ersten Bereich (2a) der ersten Befestigungsanordnung (2) in Längs- oder x-Richtung und vertikaler oder z-Richtung relativ zur ersten Befestigungsanordnung (2) angeordnet ist, so dass, wenn sich die zweite Befestigungsanordnung (3) um einen Teil des ersten Abstands (L_1) bewegt hat, das erste flexible Element (5) mit dem ersten Eingriffselement (7) in Berührung gelangt, wodurch die Federkonstante des ersten flexiblen Elements (5) erhöht wird, indem die effektive Länge (L_eff) des ersten flexiblen Elements (5) verkürzt wird.

3. Federeinheit (1) nach Anspruch 2, wobei das erste Eingriffselement (7) eine Stange umfasst, die sich in einer lateralen oder y-Richtung erstreckt und im zweiten Abstand (L_2) vom ersten Bereich der ersten Befestigungsanordnung (2) angeordnet ist, so dass, wenn sich die zweite Befestigungsanordnung (3) um einen ersten Abstand (L_1) bewegt hat, das erste flexible Element (5) mit der Stange in Berührung gelangt, wodurch die Federkonstante des ersten flexiblen Elements (5) erhöht wird, indem die effektive Länge (L_eff) des flexiblen Elements verkürzt wird.

4. Federeinheit (1) nach einem der Ansprüche 2 oder 3, wobei das erste Eingriffselement (7) mindestens ein starres oder elastisches Element umfasst, das kürzer als das erste flexible Element (5) ist, das zwischen dem ersten flexiblen Element (5) und der ersten Befestigungsanordnung (2) angeordnet ist, wobei sich ein Endabschnitt des starren oder elastischen Elements über den ersten Bereich (2a) der ersten Befestigungsanordnung (2) in Längs- oder x-Richtung des ersten flexiblen Elements (5) bis zum zweiten Abstand (L_2) erstreckt, so dass, wenn sich die zweite Befestigungsanordnung (3) um mindestens einen Teil des ersten Abstands (L_1) bewegt hat, das erste flexible Element (5) mit dem starren oder elastischen Element in Berührung gelangt, wodurch die Federkonstante des ersten flexiblen Elements (5) erhöht wird, indem die effektive Länge (L_eff) des ersten flexiblen Elements (5) verkürzt wird.

5. Federeinheit (1) nach Anspruch 4, wobei der Endabschnitt des starren oder elastischen Elements gekrümmt ist und in Längs- oder x-Richtung in gekrümmte Endabschnittsteile unterteilt ist, wobei jedes gekrümmte Endabschnittsteil einen anderen Radius umfasst, so dass, wenn sich die zweite Befestigungsanordnung (3) um einen ersten Teil des ersten Abstands (L_1) bewegt hat, das erste flexible Element (5) mit einem ersten gekrümmten Endabschnittsteil in Berührung gelangt, wodurch die Federkonstante des ersten flexiblen Elements (5) durch Verkürzung der effektiven Länge (L_eff) des ersten flexiblen Elements (5) erhöht wird, wobei, wenn sich die zweite Befestigungsanordnung (3) um einen zweiten Teil des ersten Abstands (L_1) bewegt hat, das erste flexible Element (5) mit einem zweiten gekrümmten Endabschnittsteil in Kontakt gelangt, wodurch die Federkonstante des ersten flexiblen Elements (5) weiter erhöht wird, indem die effektive Länge (L_eff) des ersten flexiblen Elements (5) weiter verkürzt wird.

6. Federeinheit (1) nach einem der vorhergehenden Ansprüche 1 bis 5, wobei das erste Eingriffselement (7) ein nachgiebiges Element ist, so dass, wenn sich die zweite Befestigungsanordnung (3) um einen ersten Teil des ersten Abstands (L_1) bewegt hat, das erste flexible Element (5) mit dem nachgiebigen Element in Berührung gelangt, wodurch die Federkonstante des ersten flexiblen Elements (5) durch Verkürzung der effektiven Länge (L_eff) des ersten flexiblen Elements (5) erhöht wird, wobei, wenn sich die zweite Befestigungsanordnung (3) um einen zweiten Teil des ersten Abstands (L_1) bewegt hat, das nachgiebige Element komprimiert und verformt wird und sich eine Kontaktfläche zwischen dem ersten flexiblen Element (5) und dem ersten nachgiebigen Element (7) vergrößert, wodurch die Federkonstante des ersten flexiblen Elements (5) weiter erhöht wird, indem die effektive Länge (L_eff) des ersten flexiblen Elements (5) weiter verkürzt wird.

7. Federeinheit (1) nach einem der Ansprüche 1 bis 6, wobei eine Position des ersten Eingriffselements (7) in Längs- oder x-Richtung und/oder vertikaler oder z-Richtung eingestellt werden kann, um die Erhöhung der Federkonstante des ersten flexiblen Elements (5) einzustellen.

8. Federeinheit (1) nach einem der vorhergehenden Ansprüche, wobei die Federanordnung (4) ferner ein zweites flexibles Element (9) umfasst, das an der ersten Befestigungsanordnung (2) und der zweiten Befestigungsanordnung (3) befestigt ist und sich zwischen diesen erstreckt, wobei Befestigungspunkte des zweiten flexiblen Elements (9) an der ersten und der zweiten Befestigungsanordnung (2, 3) in einem dritten Abstand im Wesentlichen vertikal unterhalb oder oberhalb von Befestigungspunkten des ersten flexiblen Elements (5) an der ersten und der zweiten Befestigungsanordnung (2, 3) angeordnet sind.

9. Sitzanordnung, wobei die Sitzanordnung eine Federeinheit (1) nach einem der vorhergehenden Ansprüche umfasst.

10. Aufhängungsanordnung für ein Fahrzeug wie ein Oberflächen- oder Landfahrzeug, wobei die Aufhängungsanordnung eine Federeinheit (1) nach einem der vorhergehenden Ansprüche 1 bis 8 umfasst.

11. Verfahren zum Ändern einer Federkonstante einer Federanordnung (4) in einer Federeinheit (1), wobei die Federeinheit (1) eine erste Befestigungsanordnung (2) und eine zweite Befestigungsanordnung (3) umfasst, wobei ein erstes flexibles Element (5) an der ersten Befestigungsanordnung (2) und der zweiten Befestigungsanordnung (3) befestigt ist und sich zwischen diesen erstreckt, wobei das Verfahren umfasst:
- Befestigen der ersten Befestigungsanordnung (2) fix an einer Tragstruktur (6),
- Auslegen der zweiten Befestigungsanordnung (3), so dass sie sich als Reaktion auf eine auf die zweite Befestigungsanordnung (3) ausgeübte Last um einen ersten Abstand (L_1) im Wesentlichen vertikal bewegt,
- Anordnen einer Federanordnung (4), die ein erstes Eingriffselement (7) umfasst, in der Federeinheit (1), die so ausgelegt ist, dass sie eine Änderung einer Federkonstante des ersten flexiblen Elements (5) bewirkt, so dass sich die Federkonstante des ersten flexiblen Elements (5) erhöht, nachdem die zweite Befestigungsanordnung (3) sich um mindestens einen Teil des ersten Abstands (L_1) bewegt hat,
- Bereitstellen des ersten Eingriffselements (7) mit einer nachgiebigen Oberfläche, so dass, wenn sich die zweite Befestigungsanordnung (3) um einen ersten Teil (L_1_1) des ersten Abstands (L_1) bewegt hat, das erste flexible Element (5) mit dem nachgiebigen Element in Berührung gelangt, wodurch die Federkonstante des ersten flexiblen Elements (5) durch Verkürzung der effektiven Länge (L_eff) des flexiblen Elements erhöht wird; wobei, wenn sich die zweite Befestigungsanordnung (3) um einen zweiten Teil (L_1_2) des ersten Abstands (L_1) bewegt hat, die nachgiebige Oberfläche komprimiert und verformt wird und sich eine Kontaktfläche zwischen dem ersten flexiblen Element (5) und dem ersten Eingriffselement (7) vergrößert, wodurch die Federkonstante des ersten flexiblen Elements (5) weiter erhöht wird, indem die effektive Länge (L_eff) des flexiblen Elements weiter verkürzt wird.

12. Verfahren nach Anspruch 11, wobei das Verfahren umfasst:
- Befestigen eines ersten Bereichs (5a) des ersten flexiblen Elements (5) fix an einem ersten Bereich (2a) der ersten Befestigungsanordnung (2),
- Anordnen des ersten Eingriffselements (7) in einem zweiten Abstand (L_2) vom ersten Bereich (2a) der ersten Befestigungsanordnung (2) in Längs- oder x-Richtung und vertikaler oder z-Richtung, so dass, wenn sich die zweite Befestigungsanordnung (3) um mindestens einen Teil des ersten Abstands (L_1) bewegt hat, das erste flexible Element (5) mit dem ersten Eingriffselement (7) in Berührung gelangt, wodurch die Federkonstante des ersten flexiblen Elements (5) erhöht wird, indem die effektive Länge (L_eff) des ersten flexiblen Elements (5) verkürzt wird.

13. Verfahren nach Anspruch 11 oder 12, wobei das Verfahren umfasst:
- Einstellen der Position des ersten Eingriffselements (7) in Längs- oder x-Richtung und/oder vertikaler oder z-Richtung des flexiblen Elements, um die Erhöhung der Federkonstante des ersten flexiblen Elements (5) einzustellen.

14. Verfahren nach einem der Ansprüche 11-13, wobei das Verfahren umfasst:
- Bereitstellen des ersten Eingriffselements (7) mit einem nachgiebigen Element, so dass, wenn sich die zweite Befestigungsanordnung (3) um einen ersten Teil (L_1_1) des ersten Abstands (L_1) bewegt hat, das erste flexible Element (5) mit dem nachgiebigen Element in Berührung gelangt, wodurch die Federkonstante des ersten flexiblen Elements (5) durch Verkürzung der effektiven Länge (L_eff) des flexiblen Elements erhöht wird; wobei, wenn sich die zweite Befestigungsanordnung (3) um einen zweiten Teil (L_1_2) des ersten Abstands (L_1) bewegt hat, das nachgiebige Element komprimiert und verformt wird und sich eine Kontaktfläche zwischen dem ersten flexiblen Element (5) und dem ersten Eingriffselement (7) vergrößert, wodurch die Federkonstante des ersten flexiblen Elements (5) weiter erhöht wird, indem die effektive Länge (L_eff) des flexiblen Elements weiter verkürzt wird.

15. Verfahren nach einem der Ansprüche 11-14, wobei ein zweites flexibles Element (9) an der ersten Befestigungsanordnung (2) und der zweiten Befestigungsanordnung (3) befestigt ist und sich zwischen diesen erstreckt, wobei das Verfahren umfasst:
- Anordnen von Befestigungspunkten des zweiten flexiblen Elements (9) an der ersten und der zweiten Befestigungsanordnung (2, 3) in einem dritten Abstand im Wesentlichen vertikal unterhalb oder oberhalb von Befestigungspunkten des ersten flexiblen Elements (5) an der ersten und der zweiten Befestigungsanordnung (2, 3).

## Revendications

1. Unité de ressort (1), dans laquelle l'unité de ressort (1) comprend un premier agencement de fixation (2), un deuxième agencement de fixation (3) et un agencement de ressort (4), dans laquelle l'agencement de ressort (4) comprend un premier élément flexible (5) fixé à et s'étendant entre le premier agencement de fixation (2) et le deuxième agencement de fixation (3), dans laquelle le premier agencement de fixation (2) est fixé de manière immobile à une structure de support (6) et dans laquelle le deuxième agencement de fixation (3) est agencé pour se déplacer d'une première distance (L_1) essentiellement verticalement en réponse à une charge exercée sur le deuxième agencement de fixation (3), dans laquelle l'agencement de ressort (4) comprend en outre un premier élément d'engagement (7) agencé pour provoquer une modification d'une constante de ressort du premier élément flexible (5), de sorte que lorsque le deuxième agencement de fixation (3) s'est déplacé d'une partie de la première distance (L_1), le premier élément flexible (5) vient en contact avec le premier élément d'engagement (7), conduisant à ce que la constante de ressort du premier élément flexible (5) augmente, **caractérisée en ce que** le premier élément d'engagement (7) comprend une surface élastique de sorte que lorsque le deuxième agencement de fixation (3) s'est déplacé d'une première partie de la première distance (L_1), le premier élément flexible (5) vient en contact avec le premier élément d'engagement (7), augmentant ainsi la constante de ressort du premier élément flexible (5) en raccourcissant la longueur effective (L_eff) du premier élément flexible (5), dans laquelle lorsque le deuxième agencement de fixation (3) s'est déplacé d'une deuxième partie de la première distance (L_1), la surface élastique du premier élément d'engagement (7) est comprimée et déformée et une zone de contact entre le premier élément flexible (5) et le premier élément d'engagement (7) augmente, augmentant davantage la constante de ressort du premier élément flexible (5) en raccourcissant davantage la longueur effective (L_eff) du premier élément flexible (5).

2. Unité de ressort (1) selon la revendication 1, dans laquelle une première zone (5a) du premier élément flexible (5) est fixée de manière immobile à une première zone (2a) du premier agencement de fixation (2), dans laquelle le premier élément d'engagement (7) est agencé à une deuxième distance (L_2) de la première zone (2a) du premier agencement de fixation (2) dans une direction longitudinale ou x et une direction verticale ou z par rapport au premier agencement de fixation (2) de sorte que lorsque le deuxième agencement de fixation (3) s'est déplacé d'une partie de la première distance (L_1), le premier élément flexible (5) vient en contact avec le premier élément d'engagement (7), augmentant ainsi la constante de ressort du premier élément flexible (5) en raccourcissant la longueur effective (L_eff) du premier élément flexible (5).

3. Unité de ressort (1) selon la revendication 2, dans laquelle le premier élément d'engagement (7) comprend une tige s'étendant dans une direction latérale ou y et étant agencée à la deuxième distance (L_2) de la première zone du premier agencement de fixation (2), de sorte que lorsque le deuxième agencement de fixation (3) s'est déplacé d'une première distance (L_1) le premier élément flexible (5) vient en contact avec la tige, augmentant ainsi la constante de ressort du premier élément flexible (5) en raccourcissant la longueur effective (L_eff) de l'élément flexible.

4. Unité de ressort (1) selon l'une quelconque des revendications 2 ou 3, dans laquelle le premier élément d'engagement (7) comprend au moins un élément rigide ou élastique plus court que le premier élément flexible (5) agencé entre le premier élément flexible (5) et le premier agencement de fixation (2), dans laquelle une portion d'extrémité de l'élément rigide ou élastique s'étend au-delà de la première zone (2a) du premier agencement de fixation (2) dans une direction longitudinale ou x du premier élément flexible (5) jusqu'à la deuxième distance (L_2), de sorte que lorsque le deuxième agencement de fixation (3) s'est déplacé d'au moins une partie de la première distance (L_1), le premier élément flexible (5) vient en contact avec l'élément rigide ou élastique, augmentant ainsi la constante de ressort du premier élément flexible (5) en raccourcissant la longueur effective (L_eff) du premier élément flexible (5).

5. Unité de ressort (1) selon la revendication 4, dans laquelle la portion d'extrémité de l'élément rigide ou élastique est incurvée et, dans la direction longitudinale ou x, est divisée en parties de portion d'extrémité incurvée, dans laquelle chaque partie de portion d'extrémité incurvée comprend un rayon différent, de sorte que lorsque le deuxième agencement de fixation (3) s'est déplacé d'une première partie de la première distance (L_1), le premier élément flexible (5) vient en contact avec une première partie de portion d'extrémité incurvée, augmentant ainsi la constante de ressort du premier élément flexible (5) en raccourcissant la longueur effective (L_eff) du premier élément flexible (5), dans laquelle lorsque le deuxième agencement de fixation (3) s'est déplacé d'une deuxième partie de la première distance (L_1), le premier élément flexible (5) vient en contact avec une deuxième partie de portion d'extrémité incurvée, augmentant ainsi davantage la constante de ressort du premier élément flexible (5) en raccourcissant davantage la longueur effective (L_eff) du premier élément flexible (5).

6. Unité de ressort (1) selon l'une quelconque des revendications précédentes 1 à 5, dans laquelle le premier élément d'engagement (7) est un élément élastique de sorte que lorsque le deuxième agencement de fixation (3) s'est déplacé d'une première partie de la première distance (L_1), le premier élément flexible (5) vient en contact avec l'élément élastique, augmentant ainsi la constante de ressort du premier élément flexible (5) en raccourcissant la longueur effective (L_eff) du premier élément flexible (5), dans laquelle lorsque le deuxième agencement de fixation (3) s'est déplacé d'une deuxième partie de la première distance (L_1), l'élément élastique est comprimé et déformé et une zone de contact entre le premier élément flexible (5) et le premier élément élastique (7) augmente, augmentant davantage la constante de ressort du premier élément flexible (5) en raccourcissant davantage la longueur effective (L_eff) du premier élément flexible (5).

7. Unité de ressort (1) selon l'une quelconque des revendications 1 à 6, dans laquelle une position du premier élément d'engagement (7) peut être ajustée dans la direction longitudinale ou x et/ou la direction verticale ou z pour ajuster l'augmentation de la constante de ressort du premier élément flexible (5).

8. Unité de ressort (1) selon l'une quelconque des revendications précédentes, dans laquelle l'agencement de ressort (4) comprend en outre un deuxième élément flexible (9) fixé à et s'étendant entre le premier agencement de fixation (2) et le deuxième agencement de fixation (3), dans laquelle des points de fixation du deuxième élément flexible (9) aux premier et deuxième agencements de fixation (2, 3) sont agencés à une troisième distance essentiellement verticalement au-dessous ou au-dessus de points de fixation du premier élément flexible (5) aux premier et deuxième agencements de fixation (2, 3).

9. Agencement de siège, dans lequel l'agencement de siège comprend une unité de ressort (1) selon l'une quelconque des revendications précédentes.

10. Agencement de suspension pour un véhicule tel qu'un véhicule de surface ou terrestre, dans lequel l'agencement de suspension comprend une unité de ressort (1) selon l'une quelconque des revendications précédentes 1 à 8.

11. Procédé de modification d'une constante de ressort d'un agencement de ressort (4) dans une unité de ressort (1), dans lequel l'unité de ressort (1) comprend un premier agencement de fixation (2) et un deuxième agencement de fixation (3), dans lequel un premier élément flexible (5) est fixé à et s'étend entre le premier agencement de fixation (2) et le deuxième agencement de fixation (3), le procédé comprenant les étapes consistant à :
- fixer le premier agencement de fixation (2) de manière immobile à une structure de support (6),
- agencer le deuxième agencement de fixation (3) pour se déplacer d'une première distance (L_1) essentiellement verticalement en réponse à une charge exercée sur le deuxième agencement de fixation (3),
- agencer un agencement de ressort (4) comprenant un premier élément d'engagement (7) dans l'unité de ressort (1) agencé pour provoquer une modification d'une constante de ressort du premier élément flexible (5), de sorte que la constante de ressort du premier élément flexible (5) augmente après que le deuxième agencement de fixation (3) s'est déplacé d'au moins une partie de la première distance (L_1)
- munir le premier élément d'engagement (7) d'une surface élastique de sorte que lorsque le deuxième agencement de fixation (3) s'est déplacé d'une première partie (L_1) de la première distance (L_1), le premier élément flexible (5) vient en contact avec l'élément élastique, augmentant ainsi la constante de ressort du premier élément flexible (5) en raccourcissant la longueur effective (L_eff) de l'élément flexible, dans lequel lorsque le deuxième agencement de fixation (3) s'est déplacé d'une deuxième partie (L_1_2) de la première distance (L_1), la surface élastique est comprimée et déformée et une zone de contact entre le premier élément flexible (5) et le premier élément d'engagement (7) augmente, augmentant davantage la constante de ressort du premier élément flexible (5) en raccourcissant davantage la longueur effective (L_eff) de l'élément flexible.

12. Procédé selon la revendication 11, le procédé comprenant les étapes consistant à :
- fixer une première zone (5a) du premier élément flexible (5) de manière immobile à une première zone (2a) du premier agencement de fixation (2),
- agencer le premier élément d'engagement (7) à une deuxième distance (L_2) de la première zone (2a) du premier agencement de fixation (2) dans une direction longitudinale ou x et une direction verticale ou z de sorte que lorsque le deuxième agencement de fixation (3) s'est déplacé d'au moins une partie de la première distance (L_1), le premier élément flexible (5) vient en contact avec le premier élément d'engagement (7), augmentant ainsi la constante de ressort du premier élément flexible (5) en raccourcissant la longueur effective (L_eff) du premier élément flexible (5).

13. Procédé selon la revendication 11 ou 12, le procédé comprenant l'étape consistant à :
- ajuster la position du premier élément d'engagement (7) dans la direction longitudinale ou x et/ou la direction verticale ou z de l'élément flexible pour ajuster l'augmentation de la constante de ressort du premier élément flexible (5).

14. Procédé selon l'une quelconque des revendications 11 à 13, le procédé comprenant l'étape consistant à :
- munir le premier élément d'engagement (7) d'un élément élastique de sorte que lorsque le deuxième agencement de fixation (3) s'est déplacé d'une première partie (L_1_1) de la première distance (L_1), le premier élément flexible (5) vient en contact avec l'élément élastique, augmentant ainsi la constante de ressort du premier élément flexible (5) en raccourcissant la longueur effective (L_eff) de l'élément flexible, dans lequel lorsque le deuxième agencement de fixation (3) s'est déplacé d'une deuxième partie (L_1_2) de la première distance (L_1), l'élément élastique est comprimé et déformé et une zone de contact entre le premier élément flexible (5) et le premier élément d'engagement (7) augmente, augmentant davantage la constante de ressort du premier élément flexible (5) en raccourcissant davantage la longueur effective (L_eff) de l'élément flexible.

15. Procédé selon l'une quelconque des revendications 11 à 14, dans lequel un deuxième élément flexible (9) est fixé à et s'étend entre le premier agencement de fixation (2) et le deuxième agencement de fixation (3), le procédé comprenant l'étape consistant à :
- agencer des points de fixation du deuxième élément flexible (9) au niveau des premier et deuxième agencements de fixation (2, 3) à une troisième distance essentiellement verticalement au-dessous ou au-dessus de points de fixation du premier élément flexible (5) aux premier et deuxième agencements de fixation (2, 3).
